# EUROPEAN PATENT SPECIFICATION

(11) **EP 3 059 064 B1**
(45) Date of publication and mention of the grant of the patent: **06.02.2019**
(21) Application number: 14872011.3
(22) Date of filing: 28.11.2014
(51) Int. Cl.: B29C 33/72, B29C 45/17, B29C 45/34, B29C 33/10

(54) **PLASTIC MOLDING METHOD**
KUNSTSTOFFFORMVERFAHREN
PROCÉDÉ DE MOULAGE DE PLASTIQUE

(30) Priority: 19.12.2013 JP 2013262979
(43) Date of publication of application: 24.08.2016
(73) Proprietor: Toyo Seikan Group Holdings, Ltd., Shinagawa-ku Tokyo 141-8627 (JP); Toyo Seikan Co., Ltd., Tokyo 141-8640 (JP)
(72) Inventor: KOISO, Nobuhisa, Yokohama-shi Kanagawa 240-0062 (JP); ICHIKAWA, Kentarou, Yokohama-shi Kanagawa 240-0062 (JP); NAKATANI, Toyohiko, Yokohama-shi Kanagawa 230-0001 (JP); KOTANI, Hisashi, Yokohama-shi Kanagawa 230-0001 (JP); TAJIMA, Tomonari, Yokohama-shi Kanagawa 230-0001 (JP)
(74) Representative: J A Kemp
(86) International application number: PCT/JP2014/081518
(87) International publication number: WO 2015/093256

(56) References cited:
- WO-A1-2012/045171
- WO-A1-2013/047262
- JP-A- H03 199 023
- JP-A- 2012 236 385

## Description

### Technical Field:

This invention relates to a method of forming plastic materials and, more specifically, to a method of forming plastic materials by feeding a resin into a mold to form it into a shape defined by the mold.

### Background Art:

Plastic materials are very easier to be formed than inorganic materials such as metals and have, therefore, been used in various applications. Namely, the plastic material that is heated is fed into a predetermined mold and is cooled therein so as to be formed into various shapes as defined by the mold.

A representative example of the forming method by using the mold is an injection molding method. Roughly speaking, a molten resin is injected and filled in a cavity defined by a pair of split molds, and is cooled and solidified in the cavity of the split molds so as to be formed in the shape of the cavity.

Not being limited to the injection molding method, there can be employed any means in which a solid-phase resin in a liquid or in a fluidized state is fed onto the surface of a predetermined mold and is formed into the shape that complies with the surface of the mold accompanied, however, by a problem in that part of the resin or the resin component (lubricant, etc.) adheres and remains on the surface of the mold. To avoid contamination on the mold, it is a practice to clean the surface of the mold by using a cloth or the like after the forming operation is repeated a given number of times.

In this case, however, the forming cycle must be interrupted for every cleaning work causing a decrease in the productivity.

To solve the above problem, JP-A-9-19948 proposes a method of conducting the cleaning without interrupting the forming cycle.

That is, with the method in which the resin is filled and formed in the cavity defined by the mold like the injection molding method, gases in the cavity must be vented as the resin is filled. Therefore, gas vent passages called vent holes are formed so as to be communicated with the cavity. The vent holes are formed by forming shallow grooves of a depth of about 0.01 to about 0.05 mm (width of about 1 to 10 mm) in the surface of one mold at a portion where the pair of molds is butted together for defining the cavity. The vent holes thus formed are communicated with the interior of the cavity and also with the gas passages for venting the gases.

According to means proposed by JP-A-9-19948, a cleaning gas (e.g., air) is fed through the gas passages at a moment when the pair of molds defining the cavity is opened to clean the molds. According to this means, the cleaning can be carried out by automatically flowing the gas at the moment when the molds are opened. Therefore, the vicinities of the grooves (vent groove) forming the vent holes can be effectively cleaned without interrupting the forming cycle.

WO 2012/045171 describes a molding system comprising a mold, including a mold stack for defining, in use, a molding cavity for a molded article. The mold stack includes venting surfaces that are in communication with the fluid supply channels when the mold is at least partially opened so that a pressure blast generated when the mold is at least partially open cleans, at least partially, the mold stack.

### Outline of the Invention:

### Problems that the Invention is to Solve:

Means proposed in JP-A-9-19948 is industrially very useful since it is capable of cleaning the molds without decreasing the productivity.

According to experiments conducted by the present inventors, however, the above means is capable of effectively removing foreign matters such as resin scraps, components bled from the resin and dust. As the forming cycle is conducted repetitively, however, it was found that very fine foreign matter gradually builds up in the vent groove. According to analysis by the present inventors, it has been confirmed that the foreign matter comprises low molecular components that are unavoidably contained in the resin that is used for being formed. In the case of, for example, a polyester resin, the foreign matter comprises oligomers such as of a cyclic trimer thereof, monohydroxyethyl terephthalate and bishydroxyethyl terephthalate which are low melting monomers (hereinafter collectively referred to as oligomers) . That is, the oligomers contained in the resin for forming have low molecular weights though their amounts are very small, flow into the vent groove and into very narrow portions in the vicinities thereof during the forming. Though they adhere on the surface of the mold in only very small amounts in one time of forming operation, they are difficult to be completely removed by a simple work of flowing or blowing a gas. Namely, the oligomers build up gradually as the forming is conducted repetitively. In particular, the oligomers that build up in the vent groove readily cause a defect in the gas venting, cause bubbles to stay in the formed articles, and cause a defect in the forming such as short-forming. Therefore, after the forming was repeated a certain number of times, the forming had to be halted and the surfaces of the mold had to be wiped and cleaned by hand.

Therefore, it is an object of the present invention to provide a method of forming plastic materials, which is capable of effectively preventing the oligomers from building up in the vent groove and, therefore, automatically executing the cleaning without the need of halting the forming cycle.

### Means for Solving the Problems:

According to the present invention, there is provided a method of forming a plastic material into a formed article by using a mold that has a split-mold structure defining a cavity, said split-mold structure forming an air vent in the split surfaces which are the butt surfaces of split molds, the air vent being communicated with gas passages, wherein:
the resin is fed into the mold so as to be formed, and after the formed article formed in the shape of the cavity is taken out from the mold but before the resin is fed into the mold so as to be formed in the next cycle, a cleaning gas is fed through the gas passages into the air vent in a state where the split molds are closed and there is completely formed the mold having said cavity corresponding to the shape of the formed article inclusive of the air vent, the cleaning gas being discharged through passages separate from the gas passages.

According to the method of forming of the present invention, there can be employed the following embodiments;
(1) The cleaning gas is discharged from a portion of the split surfaces of the mold where no air vent has been formed;
(2) The mold includes a shell mold and a core mold, the shell mold having a split-mold structure, the shell mold and the core mold together form the cavity into which the resin is to be fed, and the cleaning gas is introduced into the cavity through the air vent and is discharged;
(3) The resin is injected and filled in the cavity, and is formed into a container preform;
(4) While the resin is being fed, the gas is vented through the air vent toward the gas passage side; and
(5) The surface of at least the bottom portion of a vent groove forming the air vent has an arithmetic mean roughness Ra (JIS B 0601:2001) of not more than 1 *µ*m.

### Effects of the Invention:

According to the forming method of the present invention, the resin is once formed and after the formed article is taken out from the mold but before the resin is formed next, the cleaning gas is fed through the gas passages into the air vent in a state where the mold has been formed. That is, the cleaning gas is flown in a state where the split molds are closed to constitute the mold and where the very narrow air vent have been formed. Therefore, the vent groove forming the air vent and the peripheries thereof can be effectively cleaned, oligomers contained in the resin for forming are effectively prevented from building up, and the forming operation can be continuously carried out for extended periods of time without the need of halting the forming operation.

According to the prior art proposed by the above patent document and the like, the cleaning gas is flown in a state where the mold is opened. Therefore, even if the gas is flown through the gas discharge passages communicated with the vent groove, the gas diffuses in the vent groove and the vicinities thereof; i.e., the cleaning is not effected to a sufficient degree, and the oligomers are not prevented from building up. In the present invention, on the other hand, the cleaning gas is flown into the air vent in a state where the mold is closed. Therefore, the gas flows into the vent groove and the peripheries thereof in a concentrated manner, and the cleaning is effectively executed so that the oligomers will not build up.

### Brief Description of the Drawings:

[Fig. 1] : A view (a) showing a cavity surface and a gas passage of a mold for forming a plastic formed article of the shape of a plate, and a front sectional view (b) of the mold.
[Fig. 2] : A front sectional view (a) showing a mold for forming a container preform, and a sectional view (b) along the line B-B thereof.
[Fig. 3]: A front sectional view of the mold in a state where after the container preform has been formed, the core mold is pulled out with the container preform being held thereon.
[Fig. 4]: A sectional plan (as viewed from the Z-direction in Fig. 3) illustrating a state of the mold of when the container preform that is formed is to be taken out.
[Fig. 5]: A sectional plan (a) illustrating a state where the split molds of the neck portion are closed to form air vent at the start of forming the container preform, and a sectional view (b) along the line C-C thereof.
[Fig. 6]: A front sectional view illustrating a state of the mold in which the core 31 is inserted after the split molds of the neck portion have been closed.
[Fig. 7] A front sectional view illustrating the step of cleaning the mold in a state where a shell 33 is closed and the mold is completed but prior to starting the forming.

### Modes for Carrying Out the Invention:

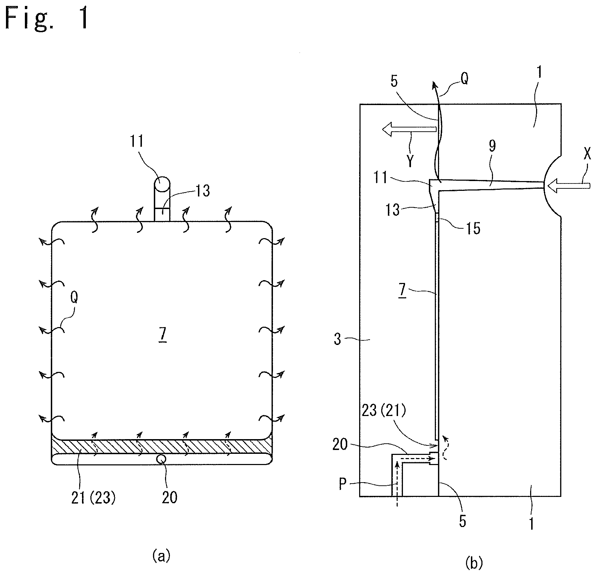

Fig. 1 is a view illustrating the method of forming plastic materials of the present invention, and shows a mold for injection molding an article in the shape of a plate which is the simplest form.

In Fig. 1, the mold comprises a pair of split molds 1 and 3 that can move relative to each other. Upon moving the split molds 1 and 3 relative to each other so as to be closed, a cavity 7 is formed in the central portion surrounded by split surfaces 5 which are butt surfaces of the two molds, the cavity 7 serving as the forming portion having flat surfaces of the shape of a plate (see, specifically, Fig. 1(a)).

One split mold 1 forms a sprue 9 communicated with an injection nozzle (not shown) for feeding resin. The other split mold 3 forms, in a portion facing the sprue 9, a recessed portion that serves as a cold slag well 11 for uniformly feeding the resin into the cavity 7. That is, with the split molds 1 and 3 being butted so as to be closed, the cold slag well 11 is formed therein, the cold slag well 11 being communicated with the cavity 7 through a runner 13 and a gate 15.

Now a molten resin to be formed is injected from the injection nozzle. The molten resin, as shown in Fig. 1 (b), is introduced into the sprue 9 in a direction represented by an arrow X, and is introduced into the cavity 7 through the cold slag well 11, runner 13 and gate 15. The molten resin cools and solidifies in the cavity 7; i.e., the resin is formed into an article in the shape of a plate in compliance with the shape of the cavity 7.

The thus formed resin article is taken out from the cavity 7 by opening the split molds 1 and 3 by, for example, sliding the split mold 3 in the direction of an arrow Y.

Here, in conducting the forming as described above, as the cavity 7 is filled with the molten resin, it becomes necessary to vent the gas in the cavity 7. If the cavity 7 is filled with the molten resin without venting the gas, then the air in the cavity entraps into the molten resin, causing bubbles to stay in the formed articles and also causing defects in the forming such as short-forming.

To vent the gas, for example, a gas passage 20 is formed in, for example, the split mold 3 to discharge the gas. Further, a narrow and shallow vent groove 21 as also described in the paragraph of background art is formed in the surface of the split mold 3 (in the split surface 5 relative to the split mold 1) so as to be communicated with the gas passage 20 and the cavity 7. Due to the formation of the vent groove 21, there is formed an air vent 23 that is communicated with the cavity 7 when the split molds 1 and 3 are closed to form the mold.

That is, referring to Fig. 1(b), as the cavity 7 is filled with the molten resin that is injected in a state where the mold is formed by closing the split molds 1 and 3, the air in the cavity 7 is discharged through the gas passage 20 and the air vent 23 due to the molten resin. The gas is thus vented smoothly.

If the gas is vented as described above, the air vent 23 is located on the side opposite to the gate 13, as a matter of course.

In carrying out the injection molding as described above according to the present invention, the formed article that has been injection-formed is taken out from the cavity 7. Thereafter, the mold is cleaned prior to executing the forming next time.

The cleaning is conducted in a state where the split molds 1 and 3 are closed but prior to injecting the molten resin. Namely, by using the air vent 23, the cleaning gas is fed through the gas passage 20. The compressed air is, usually, used as the cleaning gas. It is, however, also allowable to use any other gas such as nitrogen gas and the like gas so far as they do not adversely affect the environment or the mold.

As the injection molding is repetitively conducted, trace amounts of oligomers unavoidably contained as impurities in the resin to be formed are pushed and adhere onto the air vent 23 (vent groove 21) and the gas passage 20 in the vicinity thereof, and gradually build up on these portions. As a result, gas venting becomes insufficient causing defects in the forming.

According to the present invention, however, the cleaning gas is introduced with pressure through the gas passage 20 in a state where the split molds 1 and 3 are closed to thereby remove trace amounts of oligomers adhered onto the air vent 23 (vent groove 21) and vicinities thereof so that the oligomers are effectively prevented from building up.

For example, if the cleaning gas is flown into the gas passage 20 in a state where the split molds 1 and 3 are opened, the gas is emitted from the gas passage 20 and diffuses. Therefore, the gas cannot effectively work to clean the vent groove 21 or the vicinities thereof on where the oligomers remain adhered particularly under room temperature conditions. On the other hand, if the cleaning gas is fed through the gas passage 20 in the state where the split molds 1 and 3 are closed, the gaseous pressure remains high in the air vent 23 (vent groove 21) and in the vicinities thereof; i.e., the gas flows in a concentrated manner and effectively removes the oligomers.

In the invention, further, the cleaning gas is fed in the state where the split molds 1 and 3 are closed. Therefore, the gas flows into the cavity 7 through the gas passage 20 and the air vent 23 as represented by an arrow P. Further, as represented by arrows Q, the gas that has flown into the cavity 7 is then released to the exterior through the split surfaces 5 (where the air vent 23 has not been formed) of the split molds 1 and 3 forming the cavity 7. That is, the cleaning gas is released through the parting line of the mold formed by butting the split molds 1 and 3 together. The gas is partly discharged through the sprue 9, as a matter of course.

As a result in the invention, the oligomers deposited on the surfaces of the split molds 1 and 3 forming the cavity 7 and on the split surfaces 5 thereof are effectively removed. Besides, relatively coarse foreign matters are removed together with the cleaning gas through the sprue 9.

Here, in order to prevent the oligomers from staying on the air vent 23 according to the conventional forming methods, it had been attempted to specularly finish the surfaces of the mold in a portion where the air vent 23 is formed, e.g., to specularly finish the surface of at least the bottom of the vent groove 21 (in the split mold 3) and, more preferably, to specularly finish the opposing surfaces of the vent groove 21 (in the split mold 1) so that the surface roughness was about 0.05 to about 0.25 *µ*m in terms of the arithmetic mean roughness Ra (JIS B 0601: 2001).

According to the present invention, on the other hand, the oligomers staying in the air vent 23 can be forcibly removed with the cleaning gas without the need of specularly finishing the surfaces. For instance, at least the bottom of the vent groove 21 (of the split mold 3) may be specularly finished to a slight degree of Ra of about 1 *µ*m. To more efficiently remove the oligomers, the specular finishing may be executed to Ra of not larger than 0.5 *µ*m and to further efficiently remove the oligomers, the specular finishing may be executed to Ra of not larger than 0.25 *µ*m. As required, further, the opposing side portions of the vent groove 21 (in the split mold 1), too, may be specularly finished so that Ra is not larger than 1 *µ*m in the whole air vent 23.

In the foregoing was described the case where the article of a simple plate shape was formed. The forming method of the present invention, however, can be further applied to forming articles of more complex shapes, such as preforms for forming containers.

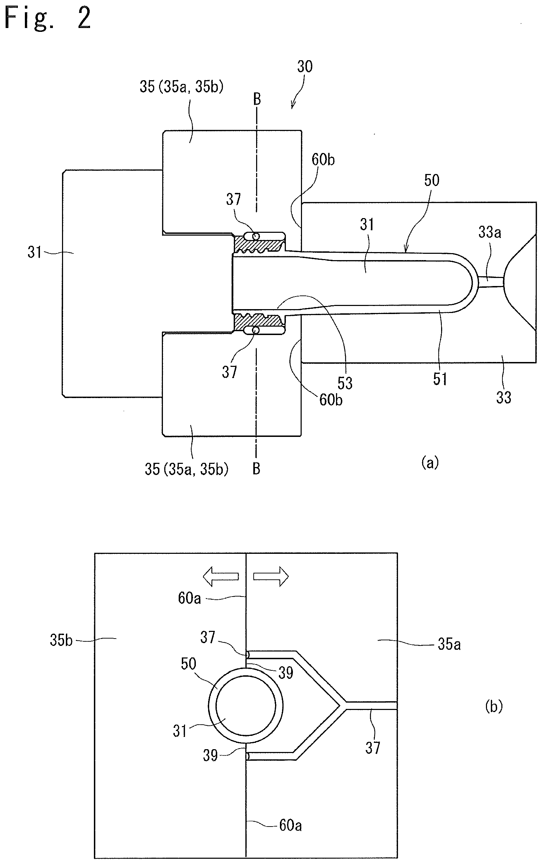

Fig. 2 to 6 illustrate processes for forming such preforms for forming containers.

Referring, first, to Fig. 2 (a) and (b) showing the structure of the mold for forming a container preform, a preform 50 is formed by a mold generally designated at 30, the preform 50 including a main body portion 51 of the shape of a test tube and a neck portion 53 forming a screw thread and a support ring on the outer surface thereof.

On the other hand, the mold 30 for forming the preform 50 of the above shape has a cavity that corresponds to the preform 50, and is roughly constituted by a core 31, a shell 33 for forming the main body portion (hereinafter abbreviated as body shell) and a shell 35 for forming the neck portion (hereinafter abbreviated as neck shell).

In the mold 30, the body shell 33 has a gate 33a communicated with an injection nozzle (not shown) while the neck shell 35 has a split-mold structure and includes molds 35a and 35b that can be opened and closed. Their butt surfaces (split surfaces) are designated at 60a. Further, gas passages 37 are formed in at least either one of the split molds 35a and 35b of the neck shell 35 (see Fig. 2 (b)). The gas passages 37 are communicated with the air vent 39 which are the vent groove formed in the split surface 60a of the neck shell 35.

The body shell 33 is allowed to slide relative to the core 31 and the neck shell 35 (35a, 35b) that is closed.

That is, as shown in Fig. 2, the split molds 35a and 35b of the neck shell are closed for the core 31. By sliding the thus fabricated core 31 and the split molds 35a, 35b of the neck shell, the core 31 is inserted in the body shell 33 to form the mold 30. Namely, the mold 30 has the cavity formed therein in a shape corresponding to the container preform 50. Further, the air vent 39 communicated with the gas passages 37 are formed in the portions corresponding to the vent groove formed in the split surface 60a.

In Fig. 2 (a), split surfaces (butt surfaces) of the body shell 33 and the neck shell 35 are designated at 60b.

A molten resin is injected by an injection machine into the gate 33a of the body shell 33 so as to be filled in the cavity of the mold 30 shown in Fig. 2, and is cooled and solidified so as to form the container preform 50.

With the molten resin being injected and filled as described above, the air present in the cavity is discharged to the exterior from the gas passages 37 through the air vent 39 formed nearly on the side opposite to the gate 33a. The gas is thus vented.

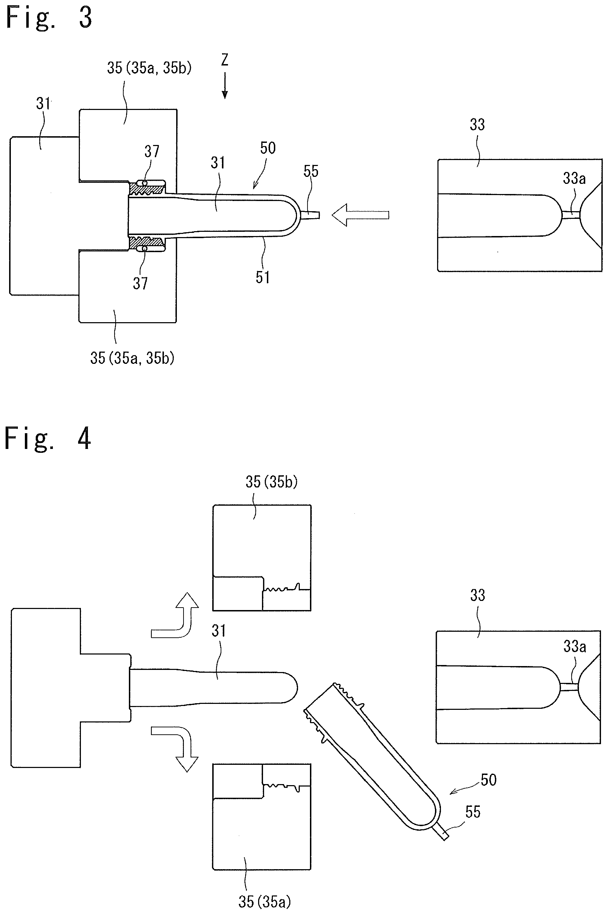

After the molten resin is cooled, solidified and is formed in the cavity, the core 31 and the split molds 35a, 35b of the neck shell are slid relative to the body shell 33 as shown in Fig. 3, and whereby the body portion 51 of the preform 50 is released.

Next, as shown in Fig. 4, the container preform 50 is pulled off the core 31, and the split molds 35a, 35b of the neck shell are opened. The container preform 50 is thus taken out.

One cycle of the process for forming the container preform 50 is thus completed, and the container preform that is taken out is transferred to the next step of secondary forming (step of, for example, blow-forming) where it is formed into the shape of a container (e.g., bottle).

The thus obtained container preform 50 has a gate remnant 55. The gate remnant 55, however, is suitably removed in a subsequent working such as of cutting.

Here, though not diagramed, the core 31, body shell 33 and neck shell 35 that are forming the mold 30 are incorporating a heat exchanger therein, respectively, and are maintained at suitable temperatures depending on the kind of the resin that is used and the forming conditions. This also holds true for the mold of Fig. 1 described above.

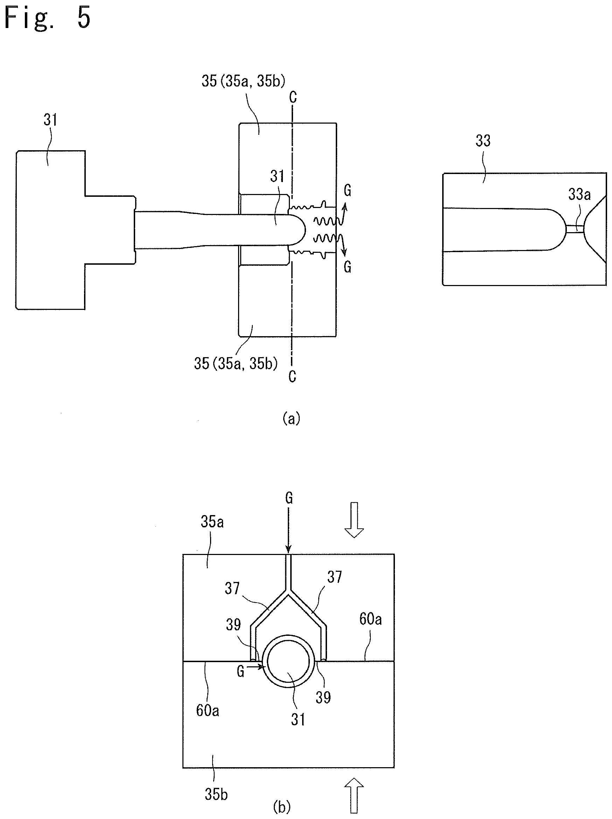

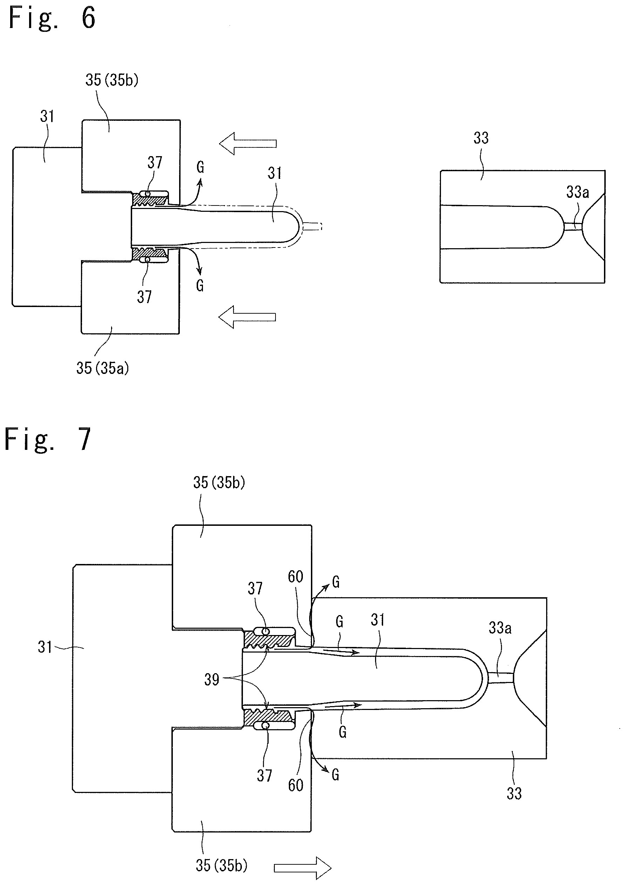

After one cycle of the forming process is completed, the next forming cycle is carried out. In the next forming cycle as shown in Fig. 5, the split molds 35a and 35b of the neck shell are closed and, next, the core 31 is slid and is inserted therein as shown in Fig. 6. There is thus formed the cavity for the neck portion 51 of the container preform 50.

Referring next to Fig. 7, the core 31 and the split molds 35a, 35b of the neck shell are slid relative to the body shell 33 and are closed to thereby form the mold 30 having the cavity of the shape corresponding to the container preform 50. That is, the mold 30 is quite the same as the one shown in Fig. 2.

The container preform 50 is formed again by using the thus formed mold 30. Here in the invention, the cleaning is executed by using a cleaning gas such as the compressed air prior to conducting the forming.

Referring, for example, to Fig. 7, in a state where the mold 30 has been formed but prior to injecting the molten resin into the gate 33a, the cleaning is executed by feeding the cleaning gas G into the air vent 39 through the gas passages 37 formed in the neck shell 35. The cleaning effectively removes the oligomer components of the resin deposited in trace amounts on the vent groove and the vicinities thereof forming the air vent 39. Let it be presumed, for example, as shown in Fig. 4 that the split molds 35a and 35b of the neck shell 35 are still opened and the air vent 39 have not been formed. Even if the cleaning gas is flown through the gas passages 37 in this state, the gas diffuses as soon as it reaches the surfaces of the split molds 35a, 35b in which vent groove are formed. Therefore, the cleaning effect is very small, and the oligomer components cannot be effectively removed. According to the present invention, on the other hand, the split molds 35a, 35b and the body shell 33 are closed, and the fine air vent 39 are formed by the vent groove. Therefore, the gas does not diffuse but concentrates in the air vent 39 making it, therefore, possible to effectively remove the oligomer components deposited in the air vent (vent groove) 39 and in the gas passages 37 in the vicinities thereof.

Besides, upon being flown through the gas passages 37 at a timing shown in Fig. 7, the cleaning gas that has passed through the air vent 39 then flows through the entire cavity that forms the container preform 50 making it possible to effectively clean the whole surfaces of the core 31 that forms the cavity, as well as to clean the whole surfaces of the body shell 31 and the neck shell 35.

The cleaning gas that flows through the cavity is discharged through the split surfaces (but surfaces) 60b of the body shell 33 and the neck shell 35 as shown in Fig. 7. Further, though not shown, the cleaning gas is also discharged through the split surfaces of the neck shell 35 (butt surfaces of the split molds 35a and 35b). Accordingly, the split surfaces 60b, too, can be effectively cleaned.

In the mold for forming the container preform, too, like in the mold of Fig. 1 described above, it is desired that the surface roughness Ra is set to be not more than 1 *µ*m, preferably, not more than 0.5 *µ*m and, more preferably, not more than 0.25 *µ*m in terms of the arithmetic mean roughness on at least the bottom of the vent groove in the split mold forming the air vent 39 (or on at least the bottoms of the grooves in both of the split molds 35a and 35b of the neck shell in case the vent groove are formed in both of the split molds) and on the opposing surfaces of the opposing split molds. As required, further, it is more desired to specularly finish the side portions of the grooves to some extent so that Ra is not more than 1 *µ*m in the whole air vent 39.

In injection molding articles in the shape of a plate shown in Fig. 1 or in forming the container preforms relying on the injection molding process shown in Figs. 2 to 7, though not specifically limited thereto only, it is desired that the gaseous pressure of the cleaning gas such as the compressed air is, usually, not less than 0.3 MPa and, specifically, not less than 2.0 MPa so that the vent groove forming the air vent 39 and the vicinities thereof can be more effectively cleaned in short periods of time.

There is no specific limitation, either, on the cleaning time. Usually, however, the cleaning time may be as short as about 0.5 to about 1.5 seconds, and the cleaning can be executed more effectively if the cleaning time is long.

In the injection molding process shown in Figs. 2 to 7, further, the cleaning can be executed at a timing as shown in Fig. 7 where the molds are all closed and the mold 30 is completely formed having the cavity corresponding to the container preform 50. In this case, the gaseous pressure is limited to some extent from the standpoint of preventing the counter flow, but the advantage is in that the whole molds forming the mold 30 can be effectively cleaned.

In the invention, it is desired that the above-mentioned cleaning operation is executed after every forming cycle consisting of closing the mold, opening the mold and taking out the formed article from such a standpoint that the apparatus can be continuously operated for extended periods of time.

The above description has dealt with the case of the injection molding. The invention, however, is not limited to the injection molding only but can also be applied to various forming methods provided the molten resin is cooled and solidified by using a mold having a predetermined split-mold structure and the mold has air vent formed therein.

As the resins for forming, it is desired to use such a polyester resin as polyethylene terephthalate, polyethylene naphthalate, polyethylene isophthalate or copoymerized polyesters thereof particularly from such a standpoint that they tend to produce oligomer deposit easily. However, olefin resins such as polyethylene and polypropylene, as well as other thermoplastic resins, too, contain oligomers as unavoidable impurities. Therefore, the present invention can be applied to the cases of forming articles using these resins, too.

### EXAMPLES

Excellent effects of the invention will now be described by way of the following Experimental Examples.

In the following experiments, there was used a polyethylene terephthalate (PET) having an intrinsic viscosity (IV) of 0.84 dL/g for forming bottles.

Further, the following method was based upon to confirm that the deposited component was an oligomer.

### Confirming the oligomer:

The split molds of the neck shell were washed with chloroform (CHCL₃) by applying ultrasonic waves. Thereafter, the washing solution was transferred into a flask and was dried and solidified in a rotary evaporator set at about 40°C. The solid substance was dissolved in the dimethylformamide (DMF) which was then passed through a filter unit of a porous size of 0.5 *µ*m to remove foreign matter and was, thereafter, poured into a high-speed liquid chromatography (HPLC) to analyze.

The state of oligomer deposited on the mold surfaces was evaluated with the eye on the following basis.
⊚: Quite no deposition of oligomer was confirmed.
○: Oligomer was not building up but deposited in a dispersed manner.
×: Build up of oligomer was clearly confirmed.

### (Example 1)

There was used the mold 30 having the structure shown in Fig. 2 and maintained at 20°C. In the mold 30, the split molds 35a, 35b of the neck shell and the body shell 31 were closed, and the air vent 39 were formed by the vent groove having a depth of about 20 *µ*m and having surfaces finished to assume a roughness Ra of 0.70 *µ*m on the bottom portions thereof. A melt of the above PET for forming container was injected and filled in the cavity in the mold 30, and was sufficiently cooled therein. Thereafter, the core 31 was slid relative to the body shell 33, and was then opened (see Fig. 3). Next, the split molds 35a and 35b of the neck shell were split and opened to take out the test tube-shaped preform 50 for forming container (see Fig. 4) .

Next, prior to entering into the next step of injection, the split molds 35a and 35b of the neck shell were closed as shown in Fig. 5 (air vent 39 have been formed in this stage) . Referring next to Fig. 6, the cavity corresponding to the neck 53 was formed therein through the core 31 and, thereafter, the cavity corresponding to the body of the preform 50 was formed by so sliding the core 31 as to enter into the body shell 33 (see Fig. 7).

Next, the air of 5 MPa was fed from an air supply into the cavity through the gas passages 37 and the air vent 39 for 1.5 seconds while being allowed to leak to the exterior of the cavity through fine gaps between the split molds 35a and 35b of the neck shell and through the gaps in the split surfaces 60 between the neck shells 35 and the body shell 33. Thereafter, the next step of injection was assumed.

The above-mentioned step was repeated 1,000 times and, thereafter, the forming machine was stopped to confirm with the eye if the oligomer has deposited on the vent groove in the split molds 35a, 35b of the neck shell and on the surface of the core 31 facing thereto. The oligomer had not been almost deposited.

### (Example 2)

The testing was conducted in the same manner as in Example 1 but changing the air pressure to 2 MPa and introducing the air for 0.5 seconds. As a result, the effect was smaller than that of Example 1, but the oligomer did not deposit on the vent groove but was dispersing.

### (Example 3)

The testing was conducted in the same manner as in Example 1 but changing the air pressure to 0.6 MPa. As a result, the effect was smaller than that of Example 2, but the oligomer did not deposit on the vent groove but was dispersing.

### (Example 4)

The testing was conducted in the same manner as in Example 1 but changing the air pressure to 0.6 MPa and introducing the air for 0.5 seconds. As a result, the effect was smaller than that of Example 3, but the oligomer did not deposit on the vent groove but was dispersing.

### (Comparative Example 1)

The testing was conducted in the same manner as in Example 1 but without at all executing the cleaning by introducing the air through the gas passages 37. As a result, the oligomer has deposited in the vent groove, in the gas passages 37 in the vicinities thereof and on the surfaces of the mold facing the vent groove.

### (Comparative Example 2)

The testing was conducted in the same manner as in Example 1 but introducing the air of 2 MPa onto the surfaces of the vent groove through the gas passages 37 while letting the air to leak to the exterior of the mold in a state where the split molds 35a and 35b of the neck shell were opened. Thereafter, the split molds 35a and 35b of the neck shell were closed and, further, the core 31 and the body shell 33 were closed to execute the next step of injection. As a result, the oligomer has deposited in the air vent groove and on the vicinities thereof.

The results of the above experiments were as collectively shown in Table 1 below.

| Table 1 | | | | |
|---|---|---|---|---|
| | Split molds of mold 35 | Molds 31, 33, 35 | Air pressure x time | Evaluated to be |
| Example 1 | closed | all closed | 5 MPa x 1.5 s | ⊚ |
| Example 2 | closed | all closed | 2 MPa x 1.5 s | ○ |
| Example 3 | closed | all closed | 0.6 MPa x 1.5 s | ○ |
| Example 4 | closed | all closed | 0.6 MPa x 0.5 s | ○ |
| Comp. Ex. 1 | closed | all closed | no pressure | × |
| Comp. Ex. 2 | opened | all opened | 2 MPa x 0.5 s | × |

### Description of Reference Numerals

1, 3: split molds
5: split surfaces
7: cavity
15: gate
20: gas passages
21: vent groove
23: air vent
30: mold for forming container preform
31: core
33: body shell
33a: gate
35 (35a, 35b): neck shells
37: gas passages
39: air vent
50: container preform
51: body portion
53: neck portion

## Claims

1. A method of forming a plastic material into a formed article by using a mold (30) that has a split-mold structure defining a cavity (7), said split-mold structure forming an air vent (23, 39) in the split surfaces (5, 60a) which are the butt surfaces of split molds (1, 3, 35a, 35b), the air vent (23, 39) being communicated with gas passages (20, 37), wherein:
a resin is fed into said mold (30) so as to be formed, and after the formed article formed in the shape of the cavity (7) is taken out from the mold (30) but before the resin is fed into the mold (30) so as to be formed in the next cycle, a cleaning gas is fed through said gas passages (20, 37) into said air vent (23, 39) in a state where the split molds (1,3, 35a, 35b) are closed and there is completely formed the mold (30) having said cavity corresponding to the shape of the formed article inclusive of said air vent (23, 39), said cleaning gas being discharged through passages separate from said gas passages (20, 37) .

2. The method of forming a plastic material according to claim 1, wherein said cleaning gas is discharged from a portion of the split surfaces (5, 60a) of said mold (30) where no air vent (23, 39) has been formed.

3. The method of forming a plastic material according to claim 1, wherein said mold (30) includes a shell mold (33, 35) and a core mold (31), said shell mold (33, 35) having a split-mold structure, said shell mold (33, 35) and said core mold (31) together form said cavity (7) into which the resin is to be fed, and said cleaning gas is introduced into said cavity (7) through said air vent (23, 39) and is discharged.

4. The method of forming according to claim 3, wherein said resin is injected and filled in said cavity (7), and is formed into a container preform (50).

5. The method of forming according to claim 1, wherein while the resin is being fed, the gas is vented through said air vent (23, 39) toward the gas passage side.

6. The method of forming according to claim 1, wherein a surface of at least the bottom portion of vent groove (21) forming said air vent (23, 39) has an arithmetic mean roughness Ra (JIS B 0601:2001) of not more than 1 *µ*m.

## Patentansprüche

1. Verfahren des Formens eines Kunststoffmaterials in einen geformten Gegenstand durch Verwenden einer Gussform (30), die eine geteilte Formstruktur aufweist, die eine Kavität (7) definiert, wobei die geteilte Formstruktur eine Entlüftung (23, 39) in den geteilten Oberflächen (5, 60a) formt, die die Anlageoberflächen von geteilten Formen (1, 3, 35a, 35b) sind, wobei die Entlüftung (23, 39) in Verbindung mit Gasdurchlässen (20, 37) steht, wobei:
ein Harz in die Gussform (30) zugeführt wird, um geformt zu werden, und nachdem der geformte Gegenstand, der in der Form der Kavität (7) geformt ist, aus der Gussform (30) herausgenommen wurde, aber bevor das Harz in die Gussform (30) zugeführt wird, um in dem nächsten Zyklus geformt zu werden, ein Reinigungsgas durch die Gasdurchlässe (20, 37) in die Entlüftung (23, 39) in einem Zustand zugeführt wird, in dem die geteilten Formen (1, 3, 35a, 35b) geschlossen sind und die Gussform (30) mit der Kavität, die der Form des geformten Gegenstands einschließlich der Entlüftung (23, 39) entspricht, vollständig geformt vorliegt, wobei das Reinigungsgas durch Durchlässe, die von den Gasdurchlässen (20, 37) getrennt sind, abgelassen wird.

2. Verfahren des Formens eines Kunststoffmaterials nach Anspruch 1, wobei das Reinigungsgas aus einem Abschnitt der geteilten Oberflächen (5, 60a) der Gussform (30) abgelassen wird, wo keine Entlüftung (23, 39) geformt wurde.

3. Verfahren des Formens eines Kunststoffmaterials nach Anspruch 1, wobei die Gussform (30) eine Schalenform (33, 35) und eine Kernform (31) beinhaltet, wobei die Schalenform (33, 35) eine geteilte Formstruktur aufweist, die Schalenform (33, 35) und die Kernform (31) zusammen die Kavität (7) formen, in die das Harz zugeführt werden soll, und das Reinigungsgas durch die Entlüftung (23, 39) in die Kavität (7) eingeführt wird und abgelassen wird.

4. Verfahren des Formens nach Anspruch 3, wobei das Harz in die Kavität (7) eingespritzt und in diese gefüllt wird und in eine Behältervorform (50) geformt wird.

5. Verfahren des Formens nach Anspruch 1, wobei, während das Harz zugeführt wird, das Gas durch die Entlüftung (23, 39) zu der Gasdurchlassseite hin entlüftet wird.

6. Verfahren des Formens nach Anspruch 1, wobei eine Oberfläche von mindestens dem Bodenabschnitt der Entlüftungsnut (21), die die Entlüftung (23, 39) formt, eine arithmetische mittlere Rauigkeit Ra (JIS B 0601:2001) von nicht mehr als 1 µm aufweist.

## Revendications

1. Procédé de formation d'une matière plastique en un article formé à l'aide d'un moule (30) qui présente une structure de moule divisé définissant une cavité (7), ladite structure de moule divisé formant un évent d'aération (23, 39) dans les surfaces divisées (5, 60a) qui constituent les surfaces de butée de moules divisés (1, 3, 35a, 35b), l'évent d'aération (23, 39) étant en communication avec les passages de gaz (20, 37), dans lequel :
une résine est introduite dans ledit moule (30) de manière à être formée, et après que l'article formé en forme de la cavité (7) a été retiré du moule (30) mais avant que la résine ne soit introduite dans le moule (30) de manière à être formée dans le cycle suivant, un gaz de nettoyage est introduit dans lesdits passages de gaz (20, 37) dans ledit évent d'aération (23, 39) dans un état où les moules divisés (1, 3, 35a, 35b) sont fermés et il se trouve le moule (30) complètement formé présentant ladite cavité correspondant à la forme de l'article formé, y compris ledit évent d'aération (23, 39), ledit gaz de nettoyage étant évacué par des passages séparés desdits passages de gaz (20, 37).

2. Procédé de formation d'une matière plastique selon la revendication 1, dans lequel ledit gaz de nettoyage est évacué depuis une partie des surfaces divisées (5, 60a) dudit moule (30) où aucun évent d'aération (23, 39) n'a été formé.

3. Procédé de formation d'une matière plastique selon la revendication 1, dans lequel ledit moule (30) comprend un moule carapace (33, 35) et un moule à noyau (31), ledit moule carapace (33, 35) présentant une structure de moule divisé, ledit moule carapace (33, 35) et ledit moule à noyau (31) formant ensemble ladite cavité (7) dans laquelle la résine doit être introduite, et ledit gaz de nettoyage est introduit dans ladite cavité (7) à travers ledit évent d'aération (23, 39) et est évacué.

4. Procédé de formation selon la revendication 3, dans lequel ladite résine est injectée et remplie dans ladite cavité (7) et est formée en une préforme de récipient (50).

5. Procédé de formation selon la revendication 1, dans lequel tandis que la résine est introduite, le gaz est ventilé par ledit évent d'aération (23, 39) vers le côté de passage de gaz.

6. Procédé de formation selon la revendication 1, dans lequel une surface d'au moins la partie inférieure de la rainure de ventilation (21) formant ledit évent d'aération (23, 39) présente une rugosité arithmétique moyenne Ra (JIS B 0601:2001) de pas plus de 1 µm.
